# EUROPÄISCHE PATENTSCHRIFT

(11) **EP 1 616 740 B1**
(45) Veröffentlichungstag und Bekanntmachung des Hinweises auf die Patenterteilung: **06.02.2008**
(21) Anmeldenummer: 05010375.3
(22) Anmeldetag: 12.05.2005
(51) Int. Cl.: B60J 10/08, B60J 10/00

(54) **Dichtung für ein Fahrzeug**
Automotive weather strip
Joint d'étanchéité pour un véhicule

(30) Priorität: 14.07.2004 DE 102004033939
(43) Veröffentlichungstag der Anmeldung: 18.01.2006
(73) Patentinhaber: Dr.Ing. h.c. F. Porsche Aktiengesellschaft, 70435 Stuttgart (DE)
(72) Erfinder: Schlachter, Reimund, 75417 Muehlacker (DE); Wetzel, Stephan, 71287 Weissach (DE)

(56) Entgegenhaltungen:
- DE-A1- 10 002 729
- DE-A1- 10 164 442
- DE-B- 1 236 953
- DE-U1- 20 316 690
- US-A- 4 761 917
- US-A- 4 989 369

## Beschreibung

Die Erfindung betrifft eine Dichtung für ein Fahrzeug zum Abdichten eines verlagerbaren Aufbauteils, insbesondere einer Tür, gegenüber einer angrenzenden feststehenden Aufbaustruktur, wobei die Dichtung aus elastischem Material besteht und wenigstens ein längsverlaufendes Hohlprofil umfasst, dessen Form bzw. Querschnitt im Fahrbetrieb veränderbar ist.

Bei Fahrzeugen, insbesondere Personenkraftwagen, besteht die Problematik, dass im Fahrbetrieb bei hohen Fahrgeschwindigkeiten aufgrund des örtlich auftretenden Unterdrucks an der Fahrzeugaußenseite verlagerbare Aufbauteile wie z.B. Türen, Klappen oder bewegliche Dachabschnitte zumindest in Teilbereichen ihrer Umfangserstreckung von der angrenzenden feststehenden Aufbaustruktur abheben, so dass die zwischengeschaltete Dichtung nicht mehr in der Lage ist, den Spalt zwischen dem verlagerbaren Aufbauteil und der feststehenden Aufbaustruktur überall wirkungsvoll abzudichten. Die Folge davon sind störende Zugbelästigungen, lästige Windgeräusche und unerwünschter Wassereintritt in den Fahrgastraum.

Versuche haben gezeigt, dass die verlagerbaren Aufbauteile im Bereich ihrer Anlenkung bzw. von Verschlüssen auch im Fahrbetrieb wirkungsvoll an der Aufbaustruktur abgestützt sind, wogegen entfernt von den Karosseriebefestigungspunkten liegende Bereiche der verlagerbaren Aufbauteile im Fahrbetrieb aufgrund der aerodynamischen Kräfte zum Abheben neigen.

Aus der DE 1 430 936 C3 geht eine Dichtung zum Abdichten einer Tür eines Fahrzeuges hervor, wobei das längsverlaufende Hohlprofil der Dichtung über seine gesamte Längserstreckung als druckdichte Kammer ausgebildet ist, die im Fahrbetrieb mittels eines Druckmediums aufgeblasen wird, wogegen im Stillstand des Fahrzeugs die Kammer mit Unterdruck beaufschlagt wird. Dieser Anordnung haftet der Nachteil an, dass zum Aufblasen des Hohlprofils eine beträchtliche Menge an Druckmedium erforderlich ist. Bei der Verwendung einer Flüssigkeit als Druckmedium verursacht das große Volumen ein relativ hohes Gewicht. Wenn ein Teilbereich des Hohlprofils eine Beschädigung aufweist, ist die Funktion der gesamten Dichtung nicht mehr gegeben und es muss die komplette Dichtung erneuert werden. Darüber hinaus werden beim Aufblasen des gesamten Hohlraumes auch Teilbereiche der Dichtung aufgeblasen, die aus Funktionsgründen eigentlich gar nicht aufgeweitet werden müssten.

Die DE 101 64 442 A1 offenbart einen Druckstreifen für Fahrzeugtüren, insbesondere zum geräuscharmen und leichtgängigen Schließen der Fahrzeugtüren, wobei ein innerer Druckraum des Druckstreifens über Zu- und Ableitungen mit einem Druckmedium beaufschlagbar ist. Der gesteuerte Druckstreifen kann endlos ausgebildet sein oder aber er erstreckt sich nur in Teilbereichen des Umfangs der Fahrzeugtür.

Die DE 12 36 953 B zeigt ein pneumatisches Dichtsystem zum Abdichten einer Fahrzeugtür gegenüber einer Kraftfahrzeugkarosserie, wobei eine umlaufende Dichtung ein längsverlaufendes Hohlprofil umfasst, dessen Form bzw. Querschnitt durch ein Druckmedium veränderbar ist.

Aufgabe der Erfindung ist es, eine Dichtung der eingangs genannten Gattung so weiterzubilden, dass bei guter Funktion der Dichtung die benötigte Menge an Druckmedium reduziert werden kann.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Anordnung von aufblasbaren Teilbereichen der Dichtung eine lokale Kraftsteigerung an jenen Stellen erzielbar ist, an denen dies auch wirklich benötigt wird. Der erforderliche Kraftaufwand zum Aufblasen der Dichtung wird reduziert und es wird wesentlich weniger Druckmedium benötigt als für ein komplett aufgeblasenes Hohlprofil. Das Aufblasen der Dichtung erfolgt lediglich an problematisch abzudichtenden Bereichen, mittels innerhalb des Hohlraumes angeordneter Füllstücke, die hydraulisch oder pneumatisch beaufschlagbar sind. Die Füllstücke stehen über Leitungen mit einem Ventil einer Druckquelle und einer Steuerung in Wirkverbindung. Jedes Füllstück ist aus einem polymeren Werkstoff, vorzugsweise einem EPDM-Elastomer gefertigt. Es wäre denkbar, jedes Füllstück an definierten Stellen mit einer Stoffbahn oder Folie so zu verstärken, dass sich das Füllstück beim Aufbringen eines Drucks nur gerichtet ausdehnen kann. Als Druckmedium wird eine Flüssigkeit oder Druckluft verwendet. Bei Verwendung einer elektrorheologischen Flüssigkeit als Druckmedium lässt sich durch zusätzliches Anlegen einer Spannung an die Flüssigkeit deren Viskosität ändern.

Ein Ausführungsbeispiel der Erfindung ist in der Zeichnung dargestellt und wird im Folgenden näher erläutert.

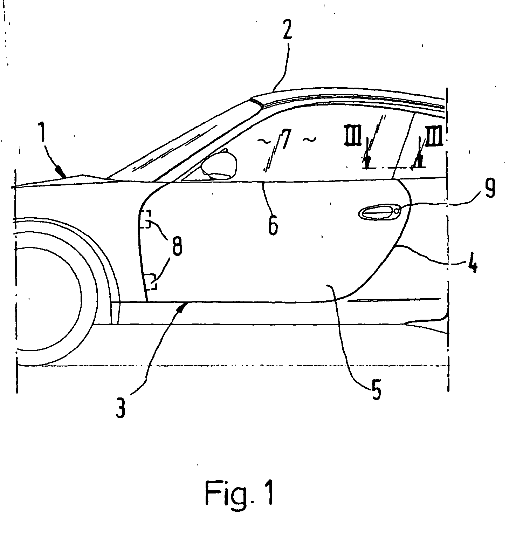

Es zeigt
- Fig. 1: eine Teilseitenansicht auf ein Fahrzeug mit einem verlagerbaren Aufbauteil und einer feststehenden Aufbaustruktur,
- Fig. 2: eine Ansicht von der Seite auf eine zwischen dem verlagerbaren Aufbauteil und der feststehenden Aufbaustruktur angeordnete Dichtung mit der erfindungsgemäßen Anordnung,

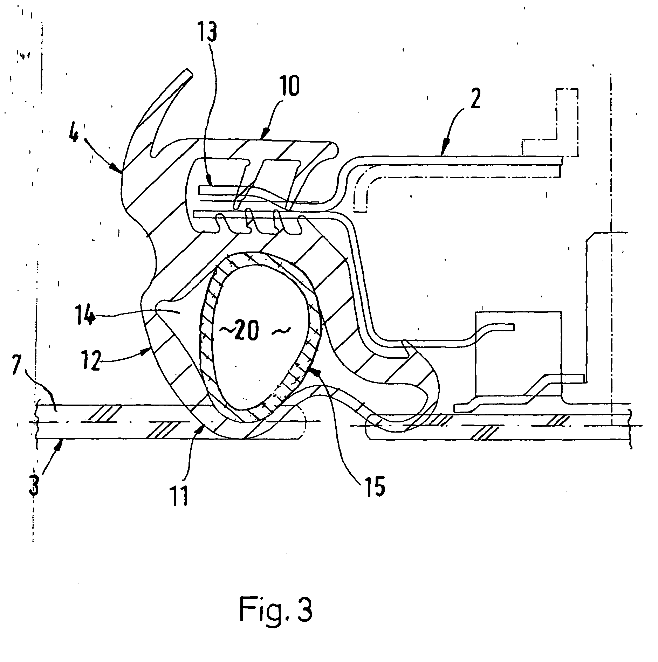

- Fig. 3: einen Schnitt nach der Linie III-III der Fig. 1 in größerer Darstellung.

Ein durch einen Personenkraftwagen gebildetes Fahrzeug 1 weist eine Aufbaustruktur 2 mit wengistens einem verlagerbaren Aufbauteil 3 auf, wobei zwischen der feststehenden Aufbaustruktur 2 und dem verlagerbaren Aufbauteil 3 eine umlaufende Dichtung 4 zwischengeschaltet ist. Das verlagerbare Aufbauteil 3 wird im Ausführungsbeispiel durch eine Tür 5 gebildet, die oberhalb einer Gürtellinie 6 mit einer höhenverstellbaren rahmenlosen Türfensterscheibe 7 versehen ist. Die Tür 5 ist an ihrer Vorderseite über Scharniere 8 und an ihrer Hinterseite über ein Schloss 9 mit der angrenzenden feststehenden Aufbaustruktur 2 verbunden.

Das verlagerbare Aufbauteil 3 könnte jedoch auch eine Klappe, eine Haube oder ein bewegbarer Dachabschnitt sein (nicht näher dargestellt). Die aus einem elastischen Material gefertigte Dichtung 4 ist entweder an der Aufbaustruktur 2 oder am verlagerbaren Aufbauteil 3 befestigt und umfasst einen relativ starren Befestigungsabschnitt 10 sowie einen elastischen Dichtbereich 11. Der Dichtbereich 11 umfasst wenigstens ein längsverlaufendes Hohlprofil 12, dessen Form bzw. Querschnitt im Fahrbetrieb des Fahrzeuges veränderbar ist. Die Dichtung 4 kann jedoch auch mehrere längsverlaufende Hohlprofile 12 aufweisen.

Im Ausführungsbeispiel ist die Dichtung 4 an der feststehenden Aufbaustruktur 2 befestigt. Hierzu ist ein U-förmiger Befestigungsabschnitt 10 auf einen abgestellten Flansch 13 der feststehenden Aufbaustruktur 2 klemmend aufgesteckt.

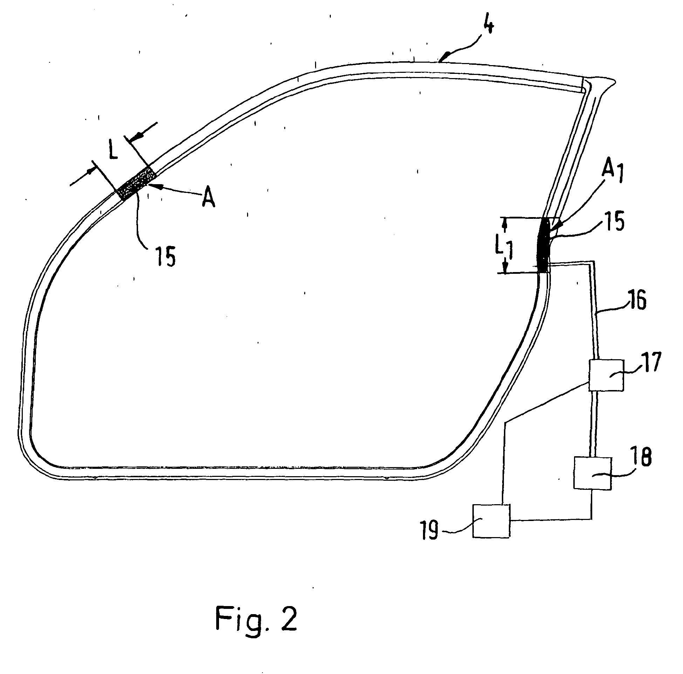

Erfindungsgemäß sind lediglich Teilbereiche A, A1 der gesamten Längserstreckung des Hohlprofils 12 der Dichtung 4 im Fahrbetrieb definiert aufblasbar ausgebildet. Die aufblasbaren Teilbereiche A, A1 der Dichtung 4 sind vorzugsweise an den Stellen, an denen das verlagerbare Aufbauteil 3 im Fahrbetrieb zum Abheben neigt und/oder an problematisch abzudichtenden Bereichen, sogenannten Stufen, angeordnet. Gemäß Fig. 2 sind an der Dichtung 4 zwei mit Abstand zueinander angeordnete aufblasbare Teilbereiche A, A1 dargestellt, wobei sich der eine Teilbereich A im Übergangsbereich eines Spiegeldreieckes der Tür 5 zur angrenzenden Türfensterscheibe 7 befindet, wogegen der andere Teilbereich A1 etwa in Höhe der Gürtellinie 6 im Übergangsbereich zwischen dem unteren Türkörper und der darüberliegenden Türfensterscheibe 7 angeordnet ist. An der Dichtung könnten noch weitere, in Fig. 2 jedoch nicht näher dargestellte Teilbereiche vorgesehen sein.

In den Teilbereichen A, A1 sind innerhalb eines Hohlraumes 14 des Hohlprofils 12 hydraulisch oder pneumatisch beaufschlagbare Füllstücke 15 angeordnet, mittels denen die Form des Hohlprofils 12 definiert steuerbar ist. Das im Teilbereich A angeordnete Füllstück 15 weist eine Länge L und das im Teilbereich A1 vorgesehene Füllstück 15 weist eine Länge Ll auf. Die aufblasbaren Füllstücke 15 sind über Leitungen 16 mit einem Ventil 17, einer Druckquelle 18 und einer Steuerung 19 dergestalt verbunden, dass beispielsweise in Abhängigkeit von der Fahrgeschwindigkeit ein definiertes Aufblasen bzw. Evakuieren des Hohlprofils 12 der Dichtung 4 erfolgt. Die Füllstücke 15 sind aus einem polymeren Werkstoff, vorzugsweise aus einem EPDM Elastomer gefertigt. Damit ein gerichtetes Ausdehnen des Füllstückes 15 beim Aufblasen gewährleistet ist, ist das Füllstück 15 an definierten Stellen mit einer Stoffbahn oder Folie verstärkt. Als Druckmedium 20 ist eine Flüssigkeit oder ein Gas, z.B. Druckluft, vorgesehen. Es wäre auch denkbar, als Druckmedium 20 eine elektrorheologische Flüssigkeit zu verwenden, wobei sich durch Anlegen einer Spannung an die Flüssigkeit deren Viskosität ändern lässt. Die wesentlichen Vorteile der erfindungsgemäßen Anordnung sind folgende: Durch die hydraulisch oder pneumatisch aufblasbaren Füllstücke 15 lässt sich gezielt eine lokale Kraftsteigerung an der Dichtstelle erzielen und je nach Fahrsituation anpassen. Die notwendige Dichtkraft wird nur gezielt örtlich aufgebracht. Die Dichtkraft wird schaltbar aufgebracht z.B. geschwindigkeitsabhängig oder kraftlos beim Schließen der Tür. Da das Druckmedium 20 nur örtlich angeordnet ist, wird das Gewicht des Bauteiles reduziert. Falls eine Dichtung 4 beschädigt werden sollte, ist die Wahrscheinlichkeit gering, dass auch das Füllstück 15 beschädigt wird. Darüber hinaus besitzt das Füllstück 15 eine eigene Wand, so dass es Beschädigungen länger Stand hält. Die Ersatzteilkosten und der Bedarf sind dadurch gering. Ein Dichtungsquietschen kann vermieden werden, da je nach Montagetoleranz der Fahrzeuge die Dichtkraft angepasst werden kann.

## Patentansprüche

1. Dichtung (4) für ein Fahrzeug zum Abdichten eines verlagerbaren Aufbauteils(3), insbesondere einer Tür (5), gegenüber einer angrenzenden feststehenden Aufbaustruktur (2), wobei die Dichtung (4) aus einem elastischen Material besteht und wenigstens ein längsverlaufendes Hohlprofil (12) umfasst, dessen Form bzw. Querschnitt im Fahrbetrieb in Teilbereichen (A, A1) durch ein Druckmedium veränderbar ist, **dadurch gekennzeichnet, dass** lediglich in den aufblasbaren Teilbereichen (A, A1) der Dichtung (4) innerhalb des Hohlraumes (14) des Hohlprofils (12) hydraulisch oder pneumatisch beaufschlagbare Füllstücke (15) angeordnet sind, mittels denen die Form bzw. der Querschnitt des Hohlprofils (12) definiert steuerbar ist.

2. Dichtung nach Anspruch 1, **dadurch gekennzeichnet, dass** die aufblasbaren Teilbereiche (A, A1) vorzugsweise an problematisch abzudichtenden Stellen der Dichtung (4) angeordnet sind.

3. Dichtung nach Anspruch 1, **dadurch gekennzeichnet, dass** die Füllstücke (15) über Leitungen (16) mit einem Ventil (17), einer Druckquelle (18) und einer Steuerung (19) in Wirkverbindung stehen.

4. Dichtung nach den Ansprüchen 1 und 3, **dadurch gekennzeichnet, dass** jedes Füllstück (15) aus einem polymeren Wirkstoff, vorzugsweise aus einem EPD-Elastomer gefertigt ist.

5. Dichtungsprofil nach einem der vorangegangenen Ansprüche, **dadurch gekennzeichnet, dass** jedes Füllstück (15) an definierten Stellen mit einer Stoffbahn oder Folie dergestalt verstärkt ist, dass sich das Füllstück (15) beim Aufblasen gerichtet ausdehnt.

6. Dichtung nach einem der vorangegangenen Ansprüche, **dadurch gekennzeichnet, dass** als Druckmedium (20) eine Flüssigkeit vorgesehen ist.

7. Dichtung nach Anspruch 6, **dadurch gekennzeichnet, dass** als Druckmedium (20) eine elektrorheologische Flüssigkeit verwendet wird, wobei sich durch Anlegen einer Spannung an die Flüssigkeit deren Viskosität ändern lässt.

8. Dichtung nach Anspruch 6, **dadurch gekennzeichnet, dass** als Druckmedium (20) ein Gas, z.B. Druckluft, vorgesehen ist.

## Claims

1. Automotive weather strip (4) for sealing a displaceable body part (3), in particular a door (5), in relation to an adjacent, fixed body structure (2), wherein the weather strip (4) is composed of an elastic material and comprises at least one hollow profile (12) which runs longitudinally and the shape or cross section of which can be changed in subregions (A, A1) by means of a pressure medium during the driving mode, **characterized in that** filler pieces (15) which can be acted upon hydraulically or pneumatically are arranged only in the inflatable subregions (A, A1) of the weather strip (4) within the cavity (14) of the hollow profile (12) and can be used to control the shape or the cross section of the hollow profile (12) in a defined manner.

2. Weather strip according to Claim 1, **characterized in that** the inflatable subregions (A, A1) are preferably arranged at points of the weather strip (4) that are problematic to seal.

3. Weather strip according to Claim 1, **characterized in that** the filler pieces (15) are operatively connected via lines (16) to a valve (17), a pressure source (18) and a controller (19).

4. Weather strip according to Claims 1 and 3, **characterized in that** each filler piece (15) is manufactured from a polymeric active compound, preferably from an EPDM elastomer.

5. Weather strip according to one of the preceding claims, **characterized in that** each filler piece (15) is reinforced at defined points by a material web or film in such a manner that the filler piece (15) expands in a directed manner upon inflation.

6. Weather strip according to one of the preceding claims, **characterized in that** a liquid is provided as the pressure medium (20).

7. Weather strip according to Claim 6, **characterized in that** an electro-rheological liquid is used as the pressure medium (20), with it being possible to change the viscosity of the liquid by applying a voltage thereto.

8. Weather strip according to Claim 6, **characterized in that** a gas, for example compressed air, is provided as the pressure medium (20).

## Revendications

1. Joint d'étanchéité (4) pour un véhicule destiné à étancher un élément de carrosserie (3) capable d'être déplacé, en particulier une portière (5), par rapport à une structure fixe adjacente de carrosserie (2), le joint d'étanchéité (4) étant fabriqué dans un matériau souple et présentant au moins un profil creux (12) qui s'étend longitudinalement, dont la forme ou selon le cas la section transversale peut être modifiée en cours de route du véhicule dans des zones partielles (A, A1) par un moyen de pression, **caractérisé en ce que** des éléments de remplissage (15) capables d'être alimentés hydrauliquement ou pneumatiquement sont disposés uniquement dans les zones partielles (A, A1) gonflables du joint d'étanchéité (4) à l'intérieur de l'espace vide (14) du profil creux (12), au moyen desquels éléments (15) la forme ou selon le cas la section transversale du profil creux (12) peut être commandée de façon définie.

2. Joint d'étanchéité selon la revendication 1, **caractérisé en ce que** les zones partielles (A, A1) gonflables sont disposées de préférence à des endroits du joint d'étanchéité (4) problématiques à étancher.

3. Joint d'étanchéité selon la revendication 1, **caractérisé en ce que** les éléments de remplissage (15) sont en relation de travail avec une soupape (17), une source de pression (18) et une commande (19), par l'intermédiaire de conduites (16).

4. Joint d'étanchéité selon les revendications 1 et 3, **caractérisé en ce que** chaque élément de remplissage (15) est fabriqué dans un matériau polymère, de préférence un élastomère EPDM.

5. Joint d'étanchéité selon l'une des revendications précédentes, **caractérisé en ce que** chaque élément de remplissage (15) est renforcé à des endroits définis par une bande de tissu ou une feuille, de telle sorte que l'élément de remplissage (15) se dilate de façon dirigée lors du gonflage.

6. Joint d'étanchéité selon l'une des revendications précédentes, **caractérisé en ce qu'**un liquide est prévu en tant que moyen de pression (20).

7. Joint d'étanchéité selon la revendication 6, **caractérisé en ce qu'**un liquide électrorhéologique est utilisé en tant que moyen de pression (20), la viscosité de celui-ci pouvant être modifiée en appliquant une tension au liquide.

8. Joint d'étanchéité selon la revendication 6, **caractérisé en ce qu'**un gaz, par exemple de l'air comprimé, est prévu en tant que moyen de pression (20).
